# EUROPEAN PATENT APPLICATION

(11) **EP 4 835 560 A1**
(43) Date of publication of application: **04.11.2026**
(21) Application number: 25172917.4
(22) Date of filing: 28.04.2025
(51) Int. Cl.: G02F 1/35, G02F 1/37

(54) **WAVELENGTH CONVERTER**

(71) Applicant: ASML Netherlands B.V., 5500 AH Veldhoven (NL)
(72) Inventor: O'DWYER, David, 5500 AH Veldhoven (NL); SMORENBURG, Petrus, Wilhelmus, 5500 AH Veldhoven (NL)
(74) Representative: ASML Netherlands B.V.

(57) **Abstract**

A wavelength converter is configured to convert radiation of a single wavelength to radiation of a converted wavelength in a range from 180 nm to 200 nm. The wavelength converter comprises:
a plurality of intermediate wavelength generators configured to manipulate the radiation of the single wavelength so as to generate radiation having an intermediate wavelength. The wavelength converter comprises a four wave mixer comprising a nonlinear medium having a nonzero third order electrical susceptibility and configured to manipulate at least the radiation having the intermediate wavelength so as to generate the radiation of the converted wavelength by four wave mixing.

## Description

### FIELD

The present invention relates to a wavelength converter, a radiation source, a lithographic apparatus and a method for converting radiation of a single wavelength.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") of a patterning device (e.g., a mask) onto a layer of radiation-sensitive material (resist) provided on a substrate (e.g., a wafer).

As semiconductor manufacturing processes continue to advance, the dimensions of circuit elements have continually been reduced while the amount of functional elements, such as transistors, per device has been steadily increasing over decades, following a trend commonly referred to as 'Moore's law'. To keep up with Moore's law the semiconductor industry is chasing technologies that enable to create increasingly smaller features. To project a pattern on a substrate a lithographic apparatus may use electromagnetic radiation. The wavelength of this radiation determines the minimum size of features which are patterned on the substrate. Typical wavelengths currently in use are 365 nm (i-line), 248 nm, 193 nm and 13.5 nm.

A deep ultra-violet (DUV) radiation source may be used to provide the radiation with a wavelength of 193 nm. Typically, an excimer gas-based source such as an ArF laser is used as the DUV radiation source. Such DUV excimer lasers are expensive to manufacture and can be inefficient.

It is desirable to facilitate the generation of DUV radiation at a reduced cost. It is desirable to facilitate more efficient generation of DUV radiation.

### SUMMARY

According to a first aspect of the present invention, there is provided a wavelength converter configured to convert radiation of a single wavelength to radiation of a converted wavelength in a range from 180 nm to 200 nm, the wavelength converter comprising: a plurality of intermediate wavelength generators configured to manipulate the radiation of the single wavelength so as to generate radiation having an intermediate wavelength; and a four wave mixer comprising a nonlinear medium having a nonzero third order electrical susceptibility and configured to manipulate at least the radiation having the intermediate wavelength so as to generate the radiation of the converted wavelength by four wave mixing.

According to a second aspect of the present invention, there is provided a method for converting radiation of a single wavelength to radiation of a converted wavelength that is a quarter of the single wavelength and in a range from 180 nm to 200 nm, the method comprising: manipulating the radiation of the single wavelength so as to generate radiation having an intermediate wavelength; and manipulating at least the radiation having the intermediate wavelength with a nonlinear medium having a nonzero third order electrical susceptibility so as to generate the radiation of the converted wavelength by four wave mixing.

### BRIEF DESCRIPTION OF THE DRAWINGS

Embodiments of the invention will now be described, by way of example only, with reference to the accompanying schematic drawings, in which:
Figure 1 depicts a schematic overview of a lithographic apparatus;
Figure 2 schematically depicts a DUV radiation source, for example of the lithographic apparatus shown in Figure 1;
Figure 3 schematically depicts a wavelength converter of a DUV radiation source, for example as shown in Figure 2;
Figure 4 schematically depicts a radiation source of a DUV radiation source, for example of the type shown in Figure 2;
Figure 5 schematically depicts a DUV radiation source, for example of the lithographic apparatus as shown in Figure 1;
Figure 6, Figure 7 and Figure 8 schematically depict alternative wavelength converters, for example of the DUV radiation source shown in Figure 2;
Figure 9 schematically depicts a DUV radiation source, for example of the lithographic apparatus shown in Figure 1;
Figure 10 schematically depicts a wavelength converter, for example of the DUV radiation source shown in Figure 2;
Figure 11, Figure 12 and Figure 13 schematically depict alternative DUV radiation sources, for example of the lithographic apparatus shown in Figure 1;
Figure 14 schematically depicts a wavelength converter, for example of the DUV radiation source shown in Figure 2;
Figure 15 schematically depicts a part of a wavelength converter; and
Figure 16 schematically depicts a tuner of a four wave mixer of a wavelength converter.

Relative dimensions of components in drawings may be exaggerated for clarity. Within the following description of drawings the same or like reference numbers refer to the same or like components or entities, and only the differences with respect to the individual embodiments are described unless it provides clarity.

### DETAILED DESCRIPTION

In the present document, the terms "radiation" and "beam" are used to encompass all types of electromagnetic radiation, including ultraviolet radiation (e.g., with a wavelength of 193, 386 or 772 nm).

The term "reticle", "mask" or "patterning device" as employed in this text may be broadly interpreted as referring to a generic patterning device that can be used to endow an incoming radiation beam with a patterned cross-section, corresponding to a pattern that is to be created at a target portion of the substrate. The term "light valve" can also be used in this context. Besides the classic mask (transmissive or reflective), examples of other such patterning devices include a programmable mirror array and a programmable LCD array.

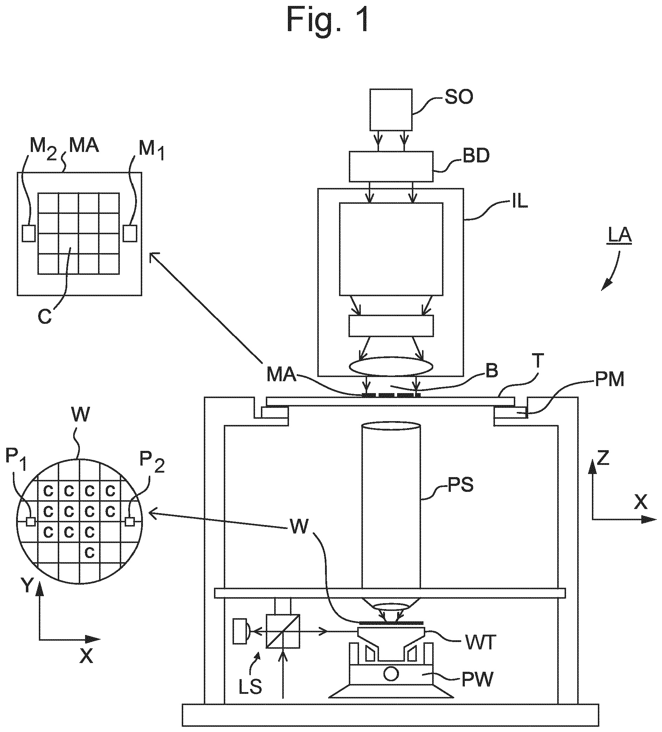

Figure 1 schematically depicts a lithographic apparatus LA. The lithographic apparatus LA includes an illumination system (also referred to as illuminator) IL configured to condition a radiation beam B (e.g., DUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a DUV radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Patterning device MA and substrate W may be aligned using mask alignment marks M₁, M₂ and substrate alignment marks P₁, P₂.

The lithographic apparatus may comprise a sensor LS used for, e.g., measuring the topography of a top surface of the substrate.

To clarify the invention, a Cartesian coordinate system is used. The Cartesian coordinate system has three axes, i.e., an x-axis, a y-axis and a z-axis. Each of the three axes is orthogonal to the other two axes. The x-axis and the y-axis define a horizontal plane, whereas the z-axis is in a vertical direction. The Cartesian coordinate system is not limiting the invention and is used for clarification only.

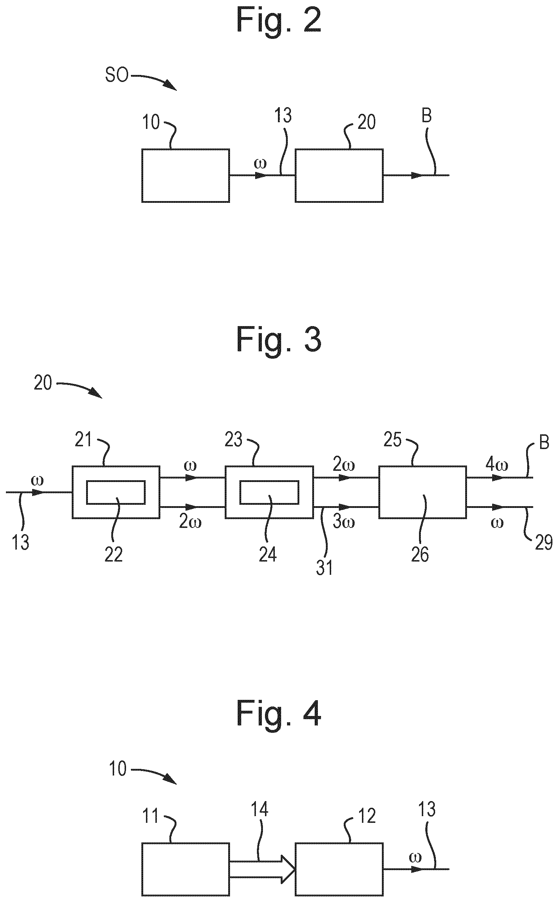

As shown in Figure 2, in an embodiment the DUV radiation source SO comprises a wavelength converter 20. The wavelength converter 20 may be configured to convert the wavelength of radiation. For example, in the arrangement shown in Figure 2, the wavelength converter 20 is configured to convert the incoming radiation 13 of a single wavelength (having frequency ω) into the wavelength of the radiation beam B generated by the DUV radiation source SO. For example, the DUV radiation source SO may be configured to generate a radiation beam B of radiation having a wavelength in the range 180 to 200 nm.

By providing the DUV radiation source SO with a wavelength converter 20, the desired wavelength of radiation may be achieved without requiring a laser source that directly emits light at DUV wavelengths. An embodiment of the invention is expected to facilitate generation of DUV radiation.

In an embodiment the wavelength converter 20 is configured to perform upconversion of longer-wavelength radiation into the DUV radiation of the radiation beam B. As shown in Figure 2, in an embodiment the DUV radiation source SO comprises a radiation source 10. The radiation source 10 generates the initial radiation that is then converted by the wavelength converter 20 into the radiation beam B. In an embodiment, the radiation source 10 is configured to generate radiation of the single wavelength (having frequency ω). The radiation source 10 is configured to output the initial radiation 13 of the frequency ω to the wavelength converter 20. The radiation beam B may be referred to as radiation of a converted wavelength, i.e., the radiation that has had its wavelength converted by the wavelength converter 20. In an embodiment, the radiation of the converted wavelength has a converted wavelength in the range from 180 nm to 200 nm.

Figure 3 schematically depicts a wavelength converter 20, for example of the DUV radiation source SO shown in Figure 2. As shown in Figure 2, in an embodiment the wavelength converter 20 comprises a plurality of intermediate wavelength generators 21, 23. The intermediate wavelength generators 21, 23 are configured to manipulate the radiation 13 of the single wavelength (having frequency ω) so as to generate radiation 31 having an intermediate wavelength. In an embodiment, the intermediate wavelength is between the wavelength of the radiation 13 of the single wavelength (having frequency ω) and the radiation of the converted wavelength, i.e., the radiation beam B. In an embodiment, the intermediate wavelength is shorter than the wavelength of the initial radiation 13. In an embodiment, the intermediate wavelength is longer than the wavelength of the radiation beam B output by the wavelength converter 20.

By providing the intermediate wavelength generators 21, 23, the generation of the DUV radiation is facilitated. It is not necessary to provide any medium that is capable of converting the initial radiation 13 into the DUV radiation in a single step. An embodiment of the invention is expected to reduce the cost of providing a wavelength converter 20 for DUV radiation.

As shown in Figure 3, in an embodiment the wavelength converter 20 comprises a four wave mixer 25. The four wave mixer 25 is configured to manipulate at least the radiation 31 having the intermediate wavelength so as to generate the radiation of the converted wavelength (i.e., the DUV radiation) by four wave mixing (FWM). FWM is a process by which a radiation interacts so as to produce radiation of different wavelengths. In an embodiment, the four wave mixer 25 is configured to generate the radiation with a converted wavelength in the range from 180 nm to 200 nm.

As shown in Figure 3, in an embodiment the four wave mixer 25 comprises a nonlinear medium 26. The nonlinear medium 26 has nonlinear optical properties. By providing that the nonlinear medium is optically nonlinear, the nonlinear medium 26 is configured to change the wavelength of radiation that propagates through the nonlinear medium 26.

In an embodiment, the nonlinear medium 26 has a nonzero third order electrical susceptibility. In an embodiment the nonlinear behaviour of the nonlinear medium 26 is determined by the third order electrical susceptibility of the nonlinear medium 26. In an embodiment the nonlinear medium 26 has a substantially zero second order electrical susceptibility. It is not essential for the nonlinear medium 26 to have a substantially zero second order electrical susceptibility. In an alternative embodiment, the nonlinear medium 26 has a nonzero second order electrical susceptibility. The nonlinear medium may have a sufficiently large third order susceptibility that the nonlinear behaviour of the nonlinear medium 26 is determined by the third order electrical susceptibility of the nonlinear medium 26. In an embodiment, the wavelength converter 20 comprises a suppressor (not shown) configured to suppress the generation of the (other) wavelengths associated with the second order susceptibility of the nonlinear medium 26. For example, the four wave mixer may be configured to suitably phase match the four wave mixing process but not a three wave mixing process.

As shown in Figure 3, in an embodiment the four wave mixer 25 is configured to generate radiation of two different wavelengths. The four wave mixer 25 is configured to generate the radiation of the converted wavelength, i.e., the DUV radiation. This radiation may be referred to as the radiation beam B for the lithographic apparatus, or as 4ω radiation (when the DUV radiation has a frequency that is four times that of the initial radiation 13) or as the signal of the four wave mixing. As shown in Figure 3, the four wave mixer 25 outputs a further radiation beam, which may be referred to as the idler 29. The idler has a longer wavelength than the signal. The signal may be the desired output of the four wave mixing process.

By providing that a four wave mixing process is used to convert the wavelength into the desired DUV radiation range, it is not necessary to provide any nonlinear crystals that have the required optical properties to convert into the DUV radiation range. Such nonlinear crystals can be expensive and/or can be easily damaged. An embodiment of the invention is expected to reduce the cost of generation of DUV radiation. An embodiment of the invention is expected to increase the lifetime of a DUV radiation source SO. An embodiment of the invention is expected to increase the potential power output of a DUV radiation source SO.

In an embodiment, the nonlinear medium 26 is fluidic. For example, the nonlinear medium 26 may be a liquid or may be gaseous. Solid media such as nonlinear crystals can have a relatively low damage threshold. An embodiment of the invention is expected to increase the damage threshold of the wavelength converter 20. An embodiment of the invention is expected to increase reliability of wavelength conversion.

In an embodiment, the nonlinear medium 26 is gaseous. For example, the nonlinear medium 26 may be an atomic gas, a molecular gas or a vapour, for example. By providing that the nonlinear medium 26 is gaseous, any problems that may be caused by cavitation in a liquid nonlinear medium may be reduced or avoided. An embodiment of the invention is expected to improve efficiency of conversion of wavelengths and generation of DUV radiation.

In an embodiment, the four wave mixer 25 is configured such that the nonlinear medium 26 is replaceable. For example the nonlinear medium 26 may be refreshed by flushing the nonlinear medium 26. In an embodiment, the four wave mixer 25 comprises a supply configured to supply the nonlinear medium 26. In an embodiment, the four wave mixer 25 comprises an extractor configured to extract the nonlinear medium 26 from the four wave mixer 25.

As shown in Figure 3, in an embodiment the converted wavelength is a quarter of the single wavelength. This is indicated by the radiation beam being 4ω radiation, while the initial radiation 13 is ω radiation. In other words, the frequency of the output radiation beam B is four times the frequency of the initial radiation 13. Correspondingly, the wavelength of the output radiation beam B is one quarter of the wavelength of the initial radiation 13. In an alternative embodiment, the converted wavelength is less than a quarter of the single wavelength. For example, further conversion steps may be performed so as to convert initial radiation of an even longer wavelength into the DUV radiation.

As shown in Figure 3, in an embodiment the four wave mixer 25 is configured to generate the radiation of the converted wavelength by nondegenerate four wave mixing. This is indicated in Figure 3 by the presence of two radiation beams of different wavelengths being input into the four wave mixer 25. In the arrangement shown in Figure 3, 2ω radiation and 3ω radiation (as the intermediate radiation 31) are input to the four wave mixer 25. In an embodiment, the four wave mixer 25 is configured to manipulate the radiation 31 having the intermediate wavelength and the 2ω radiation having a wavelength of half of the single wavelength, so as to generate the radiation of the converted wavelength.

By providing that the nonlinear medium 26 may be an atomic gas, the nonlinear medium 26 may be more resistant to undesirable ionisation. In an embodiment, the nonlinear medium 26 is expected to facilitate handling of a greater range of intensities of radiation.

It is not essential for the nonlinear medium 26 to be fluidic. For example, the nonlinear medium 26 may comprise a solid such as an amorphous material, for example silica.

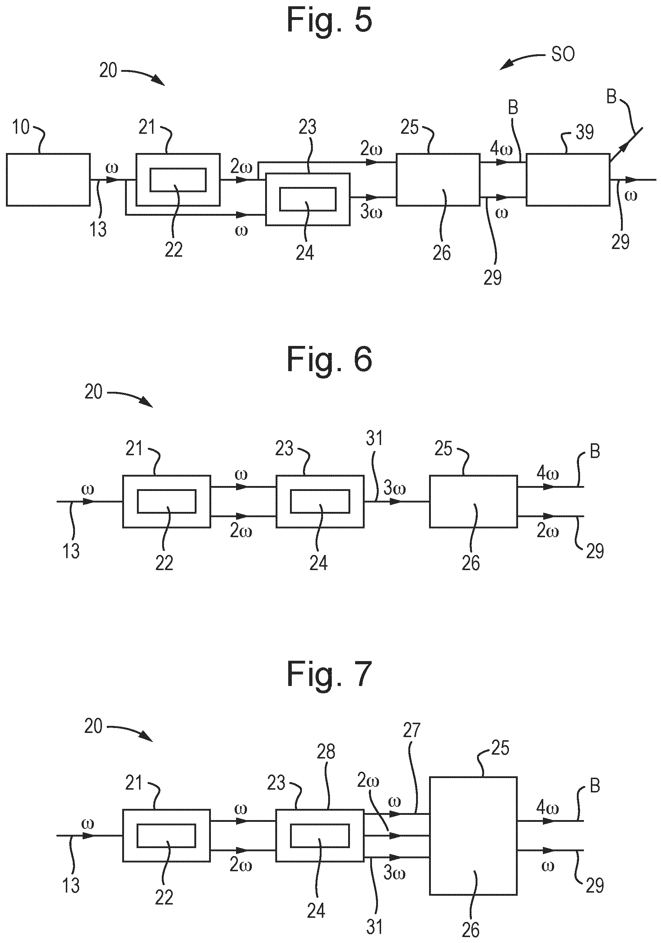

It is not essential for the four wave mixer 25 to generate the radiation of the converted wavelength by nondegenerate four wave mixing. In an alternative embodiment (for example shown in Figure 6), the four wave mixer 25 is configured to generate the radiation of the converted wavelength by degenerate four wave mixing.

As shown in Figure 3, in an embodiment the intermediate wavelength is a third of the single wavelength. This is shown in Figure 3, where the radiation having the intermediate wavelength is 3ω radiation, i.e., with a frequency that is three times greater than that of the initial radiation 13.

As shown in Figure 3, in an embodiment the plurality of intermediate wavelength generators of the wavelength converter 20 comprises a 3ω generator 23. The 3ω generator 23 is configured to generate 3ω radiation 31 having the intermediate wavelength. In an embodiment, the 3ω generator 23 is configured to generate the 3ω radiation 31 by sum frequency generation. As shown in Figure 3, in an embodiment the 3ω generator 23 is configured to receive radiation of two different wavelengths, namely ω radiation and 2ω radiation. In an embodiment, the 3ω generator 23 is configured to manipulate the ω radiation and the 2ω radiation so as to generate the 3ω radiation 31.

As shown in Figure 3, in an embodiment the 3ω generator 23 comprises a 3ω nonlinear medium 24. The 3ω nonlinear medium 24 has a nonzero second order electrical susceptibility. The 3ω nonlinear medium 24 is configured to change the wavelength of radiation that propagates through it. The nonlinear properties of the 3ω nonlinear medium 24 are determined by the second order electrical susceptibility of the 3ω nonlinear medium.

The ω radiation may be referred to as the fundamental harmonic of the initial radiation 13. The 2ω radiation may be referred to as the second harmonic of the initial radiation 13. The 3ω radiation 31 may be referred to as the third harmonic of the initial radiation 13. The 4ω radiation may be referred to as the fourth harmonic of the initial radiation 13.

In an embodiment, the 3ω generator 23 is configured to overlap the ω radiation and the 2ω radiation in the 3ω nonlinear medium 24. In an embodiment, the 3ω nonlinear medium 24 is configured to partially convert the ω radiation and the 2ω radiation into the 3ω radiation 31.

In an embodiment, the 3ω nonlinear medium 24 is a crystal, which may be referred to as a sum-frequency crystal. In an embodiment, the nonlinear medium 24 is held by an optical holder of the 3ω generator 23. In an embodiment, the 3ω nonlinear medium 24 comprises one or more of CsLiB₆O₁₀ (CLBO), β-BaB₂O₄ (BBO) and LiB₃O₅ (LBO). Other crystals for frequency upconversion may be used as the 3ω nonlinear medium 24.

As shown in Figure 3, in an embodiment the plurality of intermediate wavelength generators of the wavelength converter 20 comprises a 2ω generator 21. The 2ω generator 21 is configured to manipulate the radiation 13 of the single wavelength so as to generate 2ω radiation having a wavelength of half the single wavelength. This is indicated in Figure 3, where the 2ω generator 21 receives the initial radiation 13 with a frequency ω and outputs the 2ω radiation, i.e., radiation with the frequency doubled. In an embodiment, the 2ω generator 21 is configured to generate the 2ω radiation by frequency doubling. In an embodiment, the 2ω generator 21 is configured to partially convert the initial radiation 13 to the 2ω radiation. The 2ω radiation may be a further wavelength of radiation (in addition to the intermediate radiation) intermediate the initial radiation of the single wavelength and the radiation of the converted wavelength.

As shown in Figure 3, in an embodiment the 2ω generator 21 comprises a 2ω nonlinear medium 22. The 2ω nonlinear medium 22 has a nonzero second order electrical susceptibility. The nonlinear optical properties of the 2ω nonlinear medium may be determined by the second order electrical susceptibility of the 2ω nonlinear medium 22.

In an embodiment, the 2ω nonlinear medium 22 comprises a crystal. The crystal may be referred to as a frequency doubling crystal. In an embodiment, the crystal comprises one or more of CLBO, BBO and LBO. Alternative nonlinear crystal materials may be used as the 2ω nonlinear medium 22.

In an embodiment, the 2ω nonlinear medium 22 is different from the 3ω nonlinear medium 24. For example, the 2ω nonlinear medium 22 and the 3ω nonlinear medium 24 may comprise different crystal structures. Additionally or alternatively, the 2ω nonlinear medium 22 may comprise a crystal that is cut differently from the crystal of the 3ω nonlinear medium 24.

Figure 4 schematically depicts a radiation source 10 for the DUV radiation source SO. The radiation source 10 may be the radiation source for the initial radiation 13. In an embodiment, the radiation source 10 is configured to generate radiation of a single wavelength.

As shown in Figure 4, in an embodiment the radiation source 10 comprises an emitter 11. The emitter 11 is configured to output broadband radiation 14 having a range of different wavelengths. As shown in Figure 4, in an embodiment the radiation source 10 comprises an amplifier 12. The amplifier 12 is configured to amplify the initial radiation 13 of the single wavelength. In an embodiment, the amplifier 12 or another component of the radiation source 10 is configured to filter out radiation other than the initial radiation 13 of the single wavelength.

In an embodiment the emitter 11 is an alexandrite laser. In an embodiment, the emitter 11 is configured to output radiation with a wavelength in the range from 720 nm to 800 nm. For example, the emitter 11 may emit radiation with a wavelength of 772 nm. The 2ω generator 21 may receive the 772 nm radiation and output 386 nm radiation. The 3ω generator 23 may receive the 772 nm radiation and the 386 nm radiation so as to output 257 nm radiation. The four wave mixer 25 may receive the 386 nm radiation and the 257 nm radiation so as to output 193 nm radiation (and 772 nm radiation).

In an embodiment the converted wavelength, i.e., the wavelength of the radiation beam B output by the wavelength converter 20 is at least 190 nm. In an embodiment, the converted wavelength is at most 195 nm. In an embodiment, the converted wavelength is 193 nm. The DUV radiation source SO may be used as the source for a lithographic apparatus that has been designed for use with an input radiation beam of 193 nm.

Figure 5 schematically depicts alternative features of the wavelength converter 20. Figure 5 schematically depicts a DUV radiation source SO, for example of the lithographic apparatus shown in Figure 1.

As shown in Figure 5, in an embodiment the DUV radiation source SO comprises the radiation source 10 and the wavelength converter 20. The wavelength converter 20 shown in Figure 5 has some of the same features as the wavelength converter 20 shown in Figure 3. Where these features are the same, the description of them is not repeated, for brevity.

As shown in Figure 5, in an embodiment the 3ω generator 23 is configured to receive radiation of the single wavelength (i.e., ω radiation) directly from the radiation source 10. The ω radiation is used for manipulation by the 3ω generator 23. The radiation source 10 may be configured to output the initial radiation 13 directly to the 3ω generator 23. Here, the term "directly" means that the initial radiation 13 from the radiation source 10 is routed around the 2ω generator 21, such that it is provided to the 3ω generator 23 without requiring it to have passed through the 2ω generator 21. In other words, some of the initial radiation 13 from the radiation source 10 bypasses the 2ω generator 21 so as to reach the 3ω generator 23.

As shown in Figure 5, in an embodiment the ω radiation for the 3ω generator 23 is split off directly from the output of the radiation source 10 and rerouted to bypass the 2ω generator 21. However, this is not essential. As shown in Figure 3, in an alternative embodiment the ω radiation is provided to the 3ω generator 23 from the 2ω generator 21. That is, the ω radiation corresponds to the partially depleted ω radiation from which the 2ω radiation was generated by the 2ω generator 21.

As shown in Figure 5, in an embodiment the 2ω generator 21 is configured to output 2ω radiation directly to the four wave mixer 25 for manipulation by the four wave mixer 25. The 2ω radiation beam input to the four wave mixer 25 may be split off directly from the output of the 2ω generator 21 and rerouted to bypass the 3ω generator 23.

However, it is not essential for the 2ω radiation used by the four wave mixer 25 to be provided by the 2ω generator 21. For example, as shown in Figure 3 in an alternative embodiment the 3ω generator 23 is configured to output 2ω radiation having a wavelength of half of the single wavelength. In an embodiment, the 3ω generator 23 is configured to provide the 2ω radiation to the four wave mixer 25 for manipulation by the four wave mixer 25.

In a further alternative embodiment, the four wave mixer 25 may be configured to receive 2ω radiation from both of the 2ω generator 21 and the 3ω generator 23. In an embodiment, the ω radiation is recirculated into the 2ω generator 21. In an embodiment, the 2ω radiation is recirculated into the 3ω generator 23.

In a further alternative embodiment, the 3ω generator 23 is configured to receive the ω radiation from both the radiation source 10 directly and from the 2ω generator 21.

Figure 6 schematically depicts an alternative wavelength converter 20. As shown in Figure 6, in an embodiment the four wave mixer 25 is configured to generate the radiation of the converted wavelength (i.e., the radiation beam B) by degenerate four wave mixing. As shown in Figure 6, in an embodiment the four wave mixer 25 is configured to receive the radiation 31 of the intermediate wavelength. As shown in Figure 6, in an embodiment the radiation 31 of the intermediate wavelength is substantially the only input for the four wave mixer 25. Alternatively, as described below, further radiation beams may be provided to the four wave mixer 25 in addition to the radiation 31 of the intermediate wavelength.

As shown in Figure 6, when degenerate for wave mixing is used to form the 4ω radiation signal, the four wave mixer 25 may further generate 2ω radiation as the idler 29. The idler 29 for degenerate four wave mixing may be 2ω radiation, whereas the idler 29 for nondegenerate four wave mixing is ω radiation.

Figure 7 schematically depicts further optional features of the wavelength converter 20. The wavelength converter shown in Figure 7 may be considered as a modified version of the wavelength converter 20 shown in Figure 3. The four wave mixer 25 shown in Figure 7 is configured to perform nondegenerate four wave mixing.

As shown in Figure 7, in an embodiment the wavelength converter 20 comprises a seed beam source 28. The seed beam source 28 is configured to provide seed radiation 27 to the four wave mixer 25 so as to stimulate emission of the radiation of the converted wavelength. For example, in the arrangement shown in Figure 7, the seed radiation is ω radiation. As shown in Figure 7, in an embodiment the seed beam source 28 is separate from the four wave mixer 25. In the embodiment shown in Figure 7, the 3ω generator 23 functions as the seed beam source 28. The 3ω generator 23 is configured to provide the four wave mixer with the seed radiation 27. The seed radiation 27 may be ω radiation that has been partially depleted by the 3ω generator 23.

The seed radiation is configured to stimulate emission of the radiation of the converted wavelength. An embodiment of the invention is expected to increase efficiency of generation of DUV radiation.

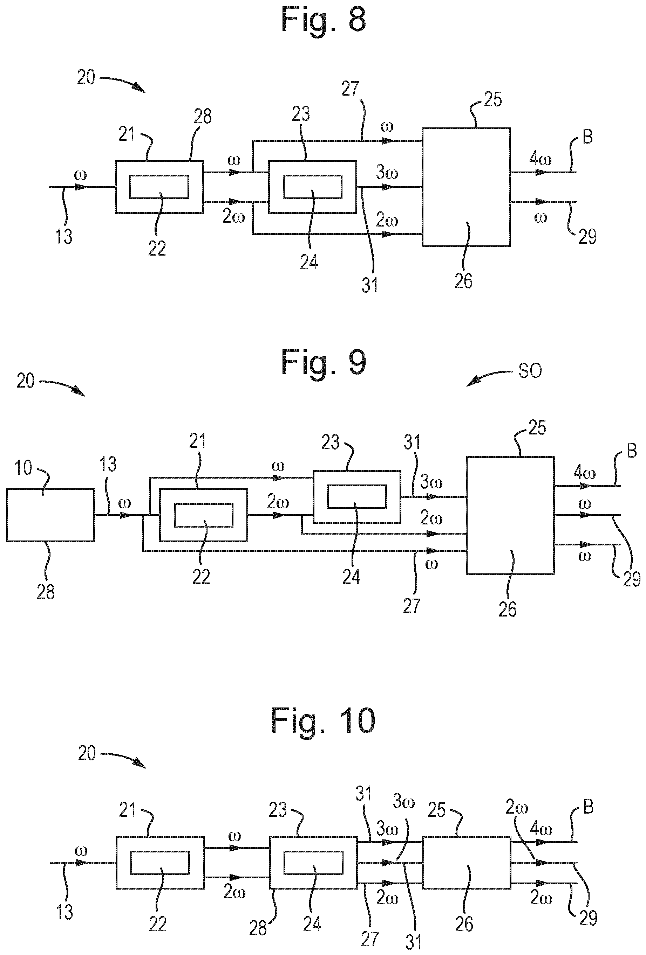

It is not essential for the 3ω generator 23 to function as the seed beam source 28. For example, Figure 8 schematically depicts an alternative embodiment in which the 2ω generator 21 functions as the seed beam source 28. As shown in Figure 8, in an embodiment the 2ω generator 21 is configured to output the seed radiation 27 directly to the four wave mixer 25, bypassing the 3ω generator 23. The seed radiation 27 may be split off from the ω radiation that is provided to the 3ω generator 23 by the 2ω generator 21.

In the arrangement shown in Figure 8, the 2ω radiation input to the four wave mixer 25 is provided directly to the 2ω generator 21, bypassing the 3ω generator 23. In an alternative arrangement, the 2ω radiation may be provided to the four wave mixer 25 by the 3ω generator 23.

In general, the optional features illustrated in the figures may be combined with each other, unless it is readily apparent that they are incompatible. The arrangements shown in the figures are merely exemplary embodiments and further embodiments may be implemented by combining the different optional features of different figures.

Figure 9 schematically depicts a further possible arrangement for the wavelength converter 20 of the DUV radiation source SO. As shown in Figure 9, in an embodiment the seed radiation 27 is provided to the four wave mixer 25 directly by the radiation source 10. In an embodiment, the radiation source 10 is configured to output the initial radiation 13 directly to the four wave mixer 25 as seed radiation 27, in addition to providing the initial radiation 13 to the 2ω generator 21. The radiation source 10 will function as the seed beam source 28.

As shown in Figure 9, in an embodiment the radiation source 10 is further configured to output initial radiation 13 directly to the 3ω generator 23, bypassing the 2ω generator 21. The radiation source 10 may be configured to output the initial radiation 13 to each of the 2ω generator 21, the 3ω generator 23 and the four wave mixer 25 (as seed radiation 27).

In the arrangement shown in Figure 9, these features are combined with the direct provision to the four wave mixer 25 of the 2ω radiation from the 2ω generator 21 (i.e., bypassing the 3ω generator 23). Alternative arrangements may be provided in which the 2ω radiation is provided to the four wave mixer 25 by the 3ω generator 23, for example.

Figure 10 schematically depicts a further possible arrangement of the wavelength converter 20. The wavelength converter 20 shown in Figure 10 uses degenerate four wave mixing so as to provide the radiation of the converted wavelength. However, as shown in Figure 10 the four wave mixer 25 is configured to receive the radiation 31 of the intermediate wavelength and also 2ω radiation as seed radiation 27. As shown in Figure 10, in an embodiment the 3ω generator 23 functions as the seed beam source 28. The 3ω generator 23 is configured to provide the seed radiation 27 to the four wave mixer 25. In a further alternative embodiment, the seed radiation 27 may be provided by the 2ω generator 21, bypassing the 3ω generator 23.

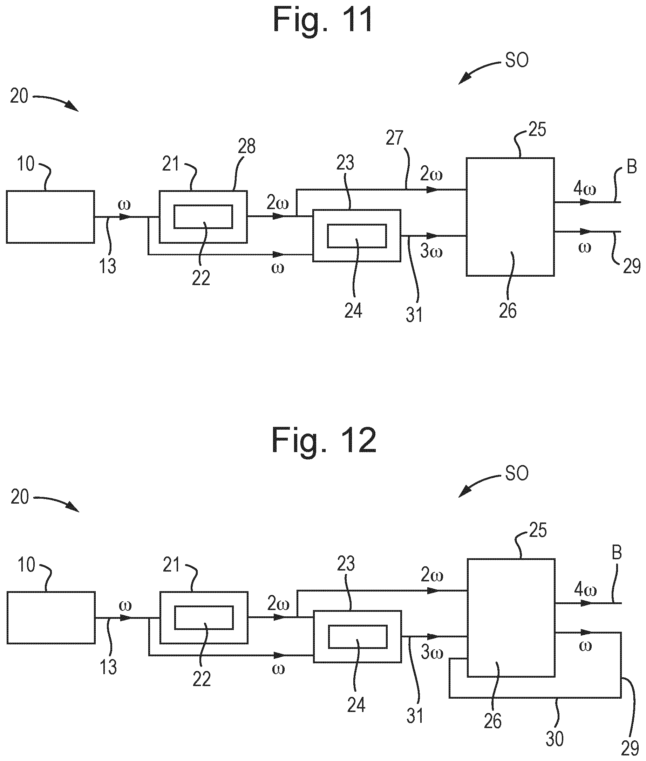

Figure 11 schematically depicts a further possible arrangement for the DUV radiation source SO. In the arrangement shown in Figure 11, the seed radiation 27 is provided by the 2ω generator 21. The 2ω generator 21 functions as the seed beam source 28. Additionally, the arrangement shown in Figure 11 has the radiation source 10 providing the initial radiation 13 directly to the 3ω generator 23, in addition to directly to the 2ω generator 21.

It is not essential for a seed beam source 28 to be provided. For example, as shown in Figure 3 or Figure 6, for example, in an alternative embodiment the four wave mixer 25 is configured to generate the radiation of the converted wavelength by single pass four wave mixing (i.e., without any seed beam).

Figure 12 schematically depicts an alternative DUV radiation source SO. As shown in Figure 12, in an embodiment the wavelength converter 20 comprises a recirculator 30. The recirculator 30 is configured to recirculate radiation generated by the four wave mixer 25 back through the four wave mixer 25. In the arrangement shown in Figure 12, the idler 29 is recirculated back into the four wave mixer 25. The idler 29 that is recirculated back into the four wave mixer 25 may function as the seed radiation. In other words, the four wave mixer 25 may be considered to be the seed beam source itself. By recirculating the idler 29 back into the four wave mixer 25, emission of the 4ω radiation by the four wave mixer 25 may be promoted. An embodiment of the invention is expected to improve the efficiency of DUV radiation generation.

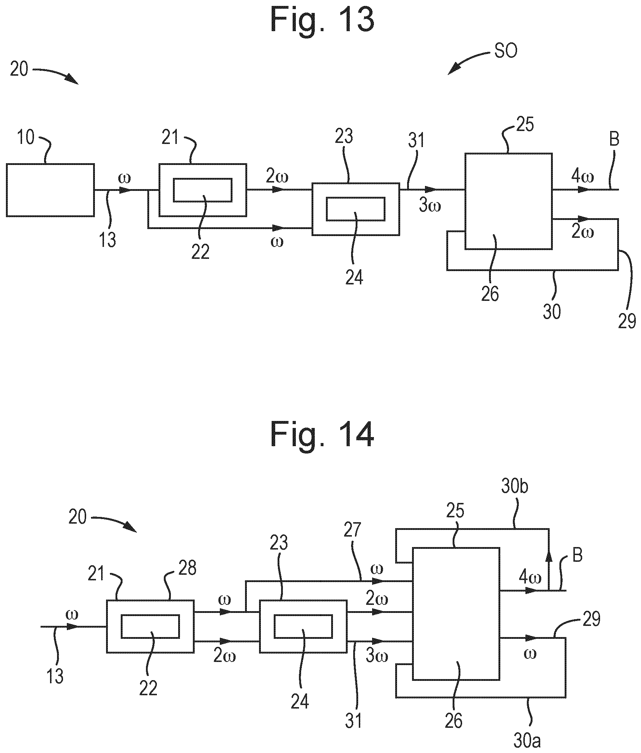

Figure 13 schematically depicts an alternative DUV radiation source SO. The arrangement shown in Figure 13 involves degenerate four wave mixing, rather than the nondegenerate four wave mixing shown in Figure 12. As shown in Figure 13, in an embodiment the idler 29 output by the four wave mixer 25 may be recirculated by the recirculator 30 back into the four wave mixer 25. In the arrangement shown in Figure 13, the idler 29 may be 2ω radiation.

In an embodiment, the four wave mixing step may be additionally enhanced by recirculating the 4ω radiation, i.e., the fourth harmonic signal beam, from the four wave mixer 25. Figure 14 schematically depicts such an alternative arrangement of the wavelength converter 10. As shown in Figure 14, in an embodiment part of the radiation beam B, i.e., the 4ω radiation signal from the four wave mixer 25 is split off by a circulator 30b to be recirculated into the four wave mixer 25. Additionally, as shown in Figure 14, the idler 29 may be recirculated by another recirculator 30a back into the four wave mixer 25.

In a further alternative embodiment, the 4ω radiation signal output by the four wave mixer 25 is partially recirculated back into the four wave mixer 25, while the idler 29 is not recirculated back into the four wave mixer 25.

In an embodiment, the wavelength converter 20 comprises a waveguide. For example, a waveguide configuration may be provided for the four wave mixer 25. In an embodiment, the waveguide is configured to contain the nonlinear medium 26. In an embodiment, the waveguide is configured such that beams of radiation manipulated by the four wave mixer 25 coherently combine (i.e., such that phase velocities of the beams of radiation combine in an advantageous way to promote coherent emission of 4ω radiation). These beams of radiation may include the radiation 31 having the intermediate wavelength. This may be referred to as matching the phase velocities of the beams.

In an embodiment, the waveguide comprises a hollow-core fibre, or a photonic crystal fibre, for example. In an embodiment, the propagation velocities of the beams may be optimised by advantageously designing the dispersion properties of the waveguide. In an embodiment, the beams that are input to the four wave mixer 25 are substantially phase matched with each other. This means that the phase velocities of the beams have a certain relationship to each other. An embodiment of the invention is expected to improve the efficiency of the conversion process.

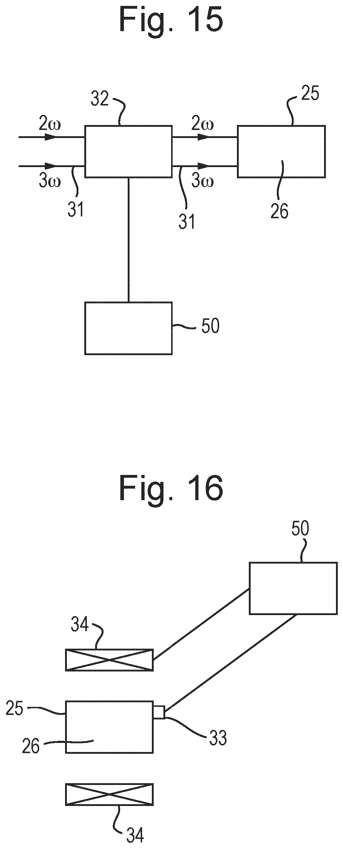

However, it is not essential for a wave guiding configuration to be provided. In an alternative embodiment, the four wave mixer 25 takes the form of a bulk cell without any particular direction of propagation. Figure 15 schematically depicts part of a wavelength converter 20. As shown in Figure 15, in an embodiment the wavelength converter 20 comprises optics 32 configured to focus beams of radiation manipulated by the four wave mixer 25 onto the nonlinear medium 26, such that the beams coherently combine (i.e., such that phase velocities of the beams of radiation combine in an advantageous way to promote coherent emission of 4ω radiation). The beams of radiation may include the radiation 31 having the intermediate wavelength. As shown in Figure 15, the beams may further include 2ω radiation, for example. As shown in other figures, other beams of radiation may be input to the four wave mixer 25 for manipulation by the four wave mixer 25.

In an embodiment, the optics 32 are designed so as to focus beams on the nonlinear medium 26 so as to optimise the propagation velocities of the beams. An embodiment of the invention is expected to improve efficiency of conversion.

As shown in Figure 15, in an embodiment the wavelength converter 20 comprises a controller 50. The controller 50 is configured to control the wavelength converter 20. For example, in an embodiment the controller 50 is configured to control the optics 32 so as to control at least one of the Rayleigh ranges, the confocal parameters and the waist sizes of the beams that are input to the four wave mixer 25. In an embodiment, the controller 50 is configured to dynamically control the focusing lengths of the beams so as to tune the phase velocities of the beams, thereby optimising efficiency of conversion.

Figure 16 schematically depicts optional features associated with the four wave mixer 25 of the wavelength converter 20. As shown in Figure 16, in an embodiment the four wave mixer 25 comprises a regulator 33. The regulator may be configured to regulate the density or pressure of the nonlinear medium 26 contained in the four wave mixer 25. In an embodiment the regulator 33 is configured to adjust the gas pressure so as to optimise the phase velocities of the beams in the four wave mixer 25. As shown in Figure 16, in an embodiment the controller 50 is configured to control the regulator 33. In an alternative arrangement, the gas pressure is selected when operating the four wave mixer 25. It may not be necessary to dynamically adjust the gas pressure during use of the wavelength converter 20.

In an embodiment, the wavelength converter 20 comprises an optical cavity in which the radiation 31 having the intermediate wavelength circulates so as to increase intensity of the radiation 31 having the intermediate wavelength in the four wave mixer 25. More generally, any or all of the steps may be enhanced by recirculating one or more of the types of radiation that are input within an optical cavity.

In an embodiment, the four wave mixer 25 is configured to generate the radiation of the converted wavelength by resonant four wave mixing. An embodiment of the invention is expected to improve the efficiency of the four wave mixing process.

For example, in an embodiment the nonlinear medium 26 has at least one atomic transmission that substantially matches the energy of one of the input beams of the four wave mixer 25 (or a combination of energies of the input beams including an integer multiple of one of the input beams). For example, in an embodiment the nonlinear medium 26 has an atomic transition substantially matching the energy of the radiation 31 having the intermediate wavelength. Additionally or alternatively, the nonlinear medium 26 may have an atomic transmission substantially matching the energy of the 2ω radiation that has a wavelength half of the single wavelength of the initial radiation 13. Additionally or alternatively, the nonlinear medium 26 may have an atomic transmission substantially matching a sum of the energy of the radiation 31 having the intermediate wavelength and the energy of the 2ω radiation. Such atomic transmission enhance the efficiency of a nondegenerate four wave mixing process. Additionally or alternatively, the nonlinear medium 26 may have an atomic transmission substantially matching the energy of the radiation of the single wavelength.

When degenerate four wave mixing is used, then the nonlinear medium 26 may have an atomic transmission substantially matching the energy of the radiation 31 having the intermediate wavelength and/or twice the energy of the radiation 31 having the intermediate wavelength.

Merely as one example, in an embodiment the nonlinear medium 26 comprises xenon. Xenon has a transition of 9.6 eV with a symmetry that allows simultaneous absorption of two photons. Xenon may be suitable for resonant degenerate four wave mixing. The transition involves an electron moving from the 5p state to one of the 6p states by absorbing two photons with energy near 250 nm. In an embodiment, the nonlinear medium 26 comprises a gas mixture such as a mixture of xenon and argon. In an embodiment, the wavelength converter 20 is configured to tune the refractive index of the nonlinear medium 26, for example by selecting or controlling the partial pressures of the gases of the mixture.

In an alternative embodiment, the nonlinear medium 26 is a vapour that would be solid under ambient conditions. For example, the nonlinear medium 26 may be metallic. In an embodiment the nonlinear medium 26 is a plasma.

In an embodiment, the wavelength converter 20 comprises a resonance tuner. The resonance tuner is configured to tune atomic resonance of the nonlinear medium 26. For example, as shown in Figure 16 in an embodiment the four wave mixer 25 comprises a regulator 33. In an embodiment the regulator 33 functions as a resonance tuner by regulating a density of the nonlinear medium 26 within the four wave mixer 25. As shown in Figure 16, in an embodiment the controller 50 controls the regulator 33. In an embodiment the controller 50 is configured to control the regulator 33 so as to tune the atomic transitions of the nonlinear medium 26 so as to achieve resonant four wave mixing.

As shown in Figure 16, additionally or alternatively the wavelength converter comprises a magnetic field generator 34 (e.g., coils). The magnetic field generator 34 is configured to generate a magnetic field within which the nonlinear medium 26 is located. In an embodiment the magnetic field generator 34 functions as a resonance tuner by applying a magnetic field to the nonlinear medium 26. Depending on the strength of the magnetic field, the atomic transmissions of the nonlinear medium 26 may vary.

As shown in Figure 16, in an embodiment the controller 50 is configured to control the magnetic field generator 34. In an embodiment, the controller 50 is configured to control the magnetic field generator 34 so as to tune the atomic transmissions of the nonlinear medium 26, so as to achieve resonant four wave mixing.

Additionally or alternatively the wavelength converter 20 comprises an electrostatic field generator. The electrostatic field generator is configured to generate a static electric field within which the nonlinear medium 26 is located. In an embodiment, the electrostatic field generator functions as a resonance tuner by applying an electrostatic field to the nonlinear medium 26. Depending on the strength of the electrostatic field, the atomic transmissions of the nonlinear medium 26 may vary. In an alternative embodiment, an electric field generator is configured to generate a time-varying electric field within which the nonlinear medium 26 is located. For example, the electric field may be pulsed or sinusoidal.

As shown in Figure 5, in an embodiment the DUV radiation source SO comprises a separator 39. The separator 39 is configured to separate the radiation of the converted wavelength, namely the radiation beam B from the idler 29, which may not be required for use by the lithographic apparatus. In an embodiment, the separator 39 comprises a dichroic element. For example, the separator 39 may be configured to reflect the radiation beam B and transmit the idler 29. By reflecting the radiation beam B, undesirable absorption of the radiation beam B by the separator 39 may be reduced. An embodiment of the invention is expected to increase the power of a DUV radiation beam B.

Alternatively, the separator 39 may be configured to reflect the idler 29 and transmit the radiation beam B.

In an alternative embodiment, the separator 39 comprises a prism. The radiation beam B and the idler 29 have different wavelengths such that they propagate through the prism at different angles. The separator 39 may be configured to spatially separate the radiation beam B from the idler 29.

In an alternative embodiment, the separator 39 comprises a transmissive filter. The transmissive filter may be configured to filter out the idler 29. For example, such a transmissive filter may be provided when the four wave mixer 25 comprises a waveguide.

In an embodiment, the 2ω generator 21 comprises one or more optical elements such as lenses and/or reflectors configured to steer, shape and/or focus the beams. In an embodiment, the 3ω generator 23 comprises one or more optical elements such as lenses and/or reflectors configured to steer, shape and/or focus the beams. In an embodiment, the four wave mixer 25 comprises one or more optical elements such as lenses and/or reflectors configured to steer, shape and/or focus the beams.

Although specific reference may be made in this text to the use of a lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

Embodiments include the following numbered clauses:
1. A wavelength converter configured to convert radiation of a single wavelength to radiation of a converted wavelength in a range from 180 nm to 200 nm, the wavelength converter comprising:
   a plurality of intermediate wavelength generators configured to manipulate the radiation of the single wavelength so as to generate radiation having an intermediate wavelength; and a four wave mixer comprising a nonlinear medium having a nonzero third order electrical susceptibility and configured to manipulate at least the radiation having the intermediate wavelength so as to generate the radiation of the converted wavelength by four wave mixing.
2. The wavelength converter of clause 1, wherein the nonlinear medium is fluidic.
3. The wavelength converter of clause 1 or 2, wherein the nonlinear medium is gaseous.
4. The wavelength converter of clause 3, wherein the nonlinear medium comprises xenon.
5. The wavelength converter of any preceding clause, wherein the nonlinear medium has a substantially zero second order electrical susceptibility.
6. The wavelength converter of any preceding clause, wherein the four wave mixer is configured to generate the radiation of the converted wavelength by resonant four wave mixing.
7. The wavelength converter of clause 6, wherein the nonlinear medium has at least one atomic transition substantially matching at least one of:
   energy of the radiation having the intermediate wavelength;
   energy of 2ω radiation having a wavelength of half of the single wavelength;
   twice the energy of the radiation having the intermediate wavelength;
   a sum of the energy of the radiation having the intermediate wavelength and the energy of 2ω radiation having a wavelength of half of the single wavelength;
   energy of the radiation of the single wavelength; and
   an integer multiple of the energy of the radiation of the single wavelength.
8. The wavelength converter of clause 7, comprising: a resonance tuner configured to tune atomic transitions of the nonlinear medium.
9. The wavelength converter of clause 8, wherein the resonance tuner is configured to tune the atomic transitions by at least one of:
   applying a magnetic field to the nonlinear medium;
   applying an electric field to the nonlinear medium; and
   regulating a density of the nonlinear medium.
10. The wavelength converter of any preceding clause, wherein the converted wavelength is a quarter of the single wavelength.
11. The wavelength converter of any preceding clause, wherein the four wave mixer is configured to generate the radiation of the converted wavelength by degenerate four wave mixing.
12. The wavelength converter of any of clauses 1-10, wherein the four wave mixer is configured to generate the radiation of the converted wavelength by nondegenerate four wave mixing, wherein the four wave mixer is configured to manipulate the radiation having the intermediate wavelength and 2ω radiation having a wavelength of half of the single wavelength so as to generate the radiation of the converted wavelength.
13. The wavelength converter of any preceding clause, wherein the intermediate wavelength is a third of the single wavelength.
14. The wavelength converter of clause 13, wherein the plurality of intermediate wavelength generators comprises: a 3ω generator configured to generate 3ω radiation having the intermediate wavelength.
15. The wavelength converter of clause 14, wherein the 3ω generator is configured to provide depleted 2ω radiation to the four wave mixer for manipulation by the four wave mixer.
16. The wavelength converter of clause 14 or 15, wherein the 3ω generator is configured to receive radiation of the single wavelength directly from a radiation source for manipulation by the 3ω generator.
17. The wavelength converter of any of clauses 14-16, wherein the 3ω generator comprises a 3ω nonlinear medium having a nonzero second order electrical susceptibility.
18. The wavelength converter of any preceding clause, wherein the plurality of intermediate wavelength generators comprises: a 2ω generator configured to manipulate the radiation of the single wavelength so as to generate 2ω radiation having a wavelength of half the single wavelength.
19. The wavelength converter of clause 18, wherein the 2ω generator is configured to output the 2ω radiation directly to the four wave mixer for manipulation by the four wave mixer.
20. The wavelength converter of clause 18 or 19, wherein the 2ω generator comprises a 2ω nonlinear medium having a nonzero second order electrical susceptibility.
21. The wavelength converter of any preceding clause, wherein the four wave mixer is configured to generate the radiation of the converted wavelength by single pass four wave mixing.
22. The wavelength converter of any of clauses 1-20, comprising: a seed beam source configured to provide seed radiation to the four wave mixer so as to stimulate emission of the radiation of the converted wavelength.
23. The wavelength converter of clause 22, wherein the seed beam source is separate from the four wave mixer.
24. The wavelength converter of clause 23, wherein the four wave mixer is configured to receive radiation of the single wavelength as the seed radiation directly from a radiation source.
25. The wavelength converter of clause 22, comprising: a recirculator configured to recirculate radiation generated by the four wave mixer back through the four wave mixer such that the four wave mixer functions as the seed beam source.
26. The wavelength converter of any preceding clause, comprising: a waveguide containing the nonlinear medium and configured such that beams of radiation manipulated by the four wave mixer including the radiation having the intermediate wavelength coherently combine.
27. The wavelength converter of any preceding clause, comprising: optics configured to focus into the nonlinear medium beams of radiation manipulated by the four wave mixer including the radiation having the intermediate wavelength, such that the beams coherently combine.
28. The wavelength converter of any preceding clause, comprising: an optical cavity in which the radiation generated by the four wave mixer other than the radiation of the converted wavelength circulates so as to increase intensity of the radiation having the intermediate wavelength in the four wave mixer.
29. The wavelength converter of any preceding clause, wherein the converted wavelength is at least 190 nm.
30. The wavelength converter of any preceding clause, wherein the converted wavelength is at most 195 nm.
31. The wavelength converter of any preceding clause, wherein the converted wavelength is 193 nm.
32. A DUV radiation source comprising: a radiation source configured to generate the radiation of the single wavelength; and the wavelength converter of any preceding clause.
33. The DUV radiation source of clause 32, wherein the radiation source comprises an alexandrite laser.
34. The DUV radiation source of clause 32 or 33, wherein the radiation source comprises an amplifier configured to amplify the radiation of the single wavelength.
35. A lithographic apparatus comprising the DUV radiation source of any of clauses 32-34.
36. A method for converting radiation of a single wavelength to radiation of a converted wavelength that is a quarter of the single wavelength and in a range from 180 nm to 200 nm, the method comprising: manipulating the radiation of the single wavelength so as to generate radiation having an intermediate wavelength; and manipulating at least the radiation having the intermediate wavelength with a nonlinear medium having a nonzero third order electrical susceptibility so as to generate the radiation of the converted wavelength by four wave mixing.
37. The method of clause 36, further comprising: controlling characteristics of the nonlinear medium by at least one of pressure, temperature, a magnetic field and an electric field so as to tune the radiation of the converted wavelength generated.

While specific embodiments of the invention have been described above, it will be appreciated that the invention may be practiced otherwise than as described. The descriptions above are intended to be illustrative, not limiting. Thus, it will be apparent to one skilled in the art that modifications may be made to the invention as described without departing from the scope of the claims set out below.

## Claims

1. A wavelength converter configured to convert radiation of a single wavelength to radiation of a converted wavelength in a range from 180 nm to 200 nm, the wavelength converter comprising:
a plurality of intermediate wavelength generators configured to manipulate the radiation of the single wavelength so as to generate radiation having an intermediate wavelength; and
a four wave mixer comprising a nonlinear medium having a nonzero third order electrical susceptibility and configured to manipulate at least the radiation having the intermediate wavelength so as to generate the radiation of the converted wavelength by four wave mixing.

2. The wavelength converter of claim 1, wherein the nonlinear medium is fluidic.

3. The wavelength converter of claim 1 or 2, wherein the nonlinear medium is gaseous.

4. The wavelength converter of any preceding claim, wherein the four wave mixer is configured to generate the radiation of the converted wavelength by resonant four wave mixing, and wherein the nonlinear medium has at least one atomic transition substantially matching at least one of:
energy of the radiation having the intermediate wavelength;
energy of 2ω radiation having a wavelength of half of the single wavelength;
twice the energy of the radiation having the intermediate wavelength;
a sum of the energy of the radiation having the intermediate wavelength and the energy of 2ω radiation having a wavelength of half of the single wavelength;
energy of the radiation of the single wavelength; and
an integer multiple of the energy of the radiation of the single wavelength.

5. The wavelength converter of claim 4, comprising:
a resonance tuner configured to tune atomic transitions of the nonlinear medium.

6. The wavelength converter of any preceding claim, wherein the four wave mixer is configured to generate the radiation of the converted wavelength by degenerate four wave mixing.

7. The wavelength converter of any of claims 1-5, wherein the four wave mixer is configured to generate the radiation of the converted wavelength by nondegenerate four wave mixing, wherein the four wave mixer is configured to manipulate the radiation having the intermediate wavelength and 2ω radiation having a wavelength of half of the single wavelength so as to generate the radiation of the converted wavelength.

8. The wavelength converter of any preceding claim, wherein the intermediate wavelength is a third of the single wavelength.

9. The wavelength converter of any of claims 1-8, comprising:
a seed beam source configured to provide seed radiation to the four wave mixer so as to stimulate emission of the radiation of the converted wavelength.

10. The wavelength converter of any preceding claim, comprising:
a waveguide containing the nonlinear medium and configured such that beams of radiation manipulated by the four wave mixer including the radiation having the intermediate wavelength coherently combine.

11. The wavelength converter of any preceding claim, comprising:
an optical cavity in which the radiation generated by the four wave mixer other than the radiation of the converted wavelength circulates so as to increase intensity of the radiation having the intermediate wavelength in the four wave mixer.

12. A DUV radiation source comprising:
a radiation source configured to generate the radiation of the single wavelength; and
the wavelength converter of any preceding claim.

13. The DUV radiation source of claim 12, wherein the radiation source comprises an alexandrite laser.

14. A method for converting radiation of a single wavelength to radiation of a converted wavelength that is a quarter of the single wavelength and in a range from 180 nm to 200 nm, the method comprising:
manipulating the radiation of the single wavelength so as to generate radiation having an intermediate wavelength; and
manipulating at least the radiation having the intermediate wavelength with a nonlinear medium having a nonzero third order electrical susceptibility so as to generate the radiation of the converted wavelength by four wave mixing.

15. The method of claim 14, further comprising:
controlling characteristics of the nonlinear medium by at least one of pressure, temperature, a magnetic field and an electric field so as to tune the radiation of the converted wavelength generated.
